# EUROPÄISCHE PATENTSCHRIFT

(11) **EP 3 359 863 B1**
(45) Veröffentlichungstag und Bekanntmachung des Hinweises auf die Patenterteilung: **24.11.2021**
(21) Anmeldenummer: 16777972.7
(22) Anmeldetag: 03.10.2016
(51) Int. Cl.: F02B 33/44, F16L 37/088, F02M 35/10, F16L 13/14

(54) **STECKVERBINDER ZUM VERBINDEN VON LEITUNGEN FÜR FLÜSSIGE ODER GASFÖRMIGE MEDIEN**
CONNECTOR FOR CONNECTING CONDUITS FOR LIQUID OR GASEOUS MEDIA
RACCORD EMMANCHABLE POUR LE RACCORDEMENT DE CONDUITES DE MATIÈRES LIQUIDES OU GAZEUSES

(30) Priorität: 07.10.2015 AT 508562015
(43) Veröffentlichungstag der Anmeldung: 15.08.2018
(73) Patentinhaber: Henn GmbH & Co KG., 6850 Dornbirn (AT)
(72) Erfinder: BALDREICH, Wolfgang, 6850 Dornbirn (AT); HARTMANN, Harald, 6850 Dornbirn (AT)
(74) Vertreter: Burger, Hannes
(86) Internationale Anmeldenummer: PCT/EP2016/073541
(87) Internationale Veröffentlichungsnummer: WO 2017/060185

(56) Entgegenhaltungen:
- EP-A1- 2 360 411
- WO-A1-2005/045299
- WO-A1-2005/103551

## Beschreibung

Die Erfindung betrifft einen Steckverbinder zum Verbinden von Leitungen für flüssige oder gasförmige Medien.

Aus der EP 2 360 411 A1 ist ein gattungsgemäßer Steckverbinder für ein Kraftfahrzeug bekannt. Der Steckverbinder zum Verbinden von Leitungen für flüssige oder gasförmige Medien umfasst eine Hülse, die eine Einstecköffnung aufweist. In die Einstecköffnung ist ein Stutzen einsteckbar. Weiters umfasst der Steckverbinder und eine die Hülse zumindest über einen Teil ihres Umfangs umgebende Rastfeder, welche zwischen einer Raststellung zum Verrasten des mit dem Steckverbinder zusammengesteckten Stutzens und einer gegenüber der Hülse verrasteten Freigabestellung, in der die Verrastung mit dem Stutzen gelöst ist und der Stutzen aus der Einstecköffnung der Hülse herausziehbar ist, verstellbar ist. Die Rastfeder ragt zumindest in ihrer Raststellung über mindestens einen Abschnitt ihrer Längserstreckung, in welchem sie mit dem Stutzen verrastbar ist, durch eine Durchtrittsöffnung der Hülse in den von der Hülse umgebenden Innenraum. Weiters ist und wobei die Rastfeder in ihrer verrasteten Freigabestellung an mindestens einer Raststelle der Rastfeder hinter einen Haltevorsprung der Hülse in eine Haltevertiefung der Hülse eingerastet. Der Haltevorsprung springt gegenüber der Haltevertiefung in axialer Richtung der Hülse vor.

Der Steckverbinder der EP 2 360 411 A1 weist einen komplexen Aufbau auf und ist daher schwer herzustellen.

Aufgabe der vorliegenden Erfindung war es, die Nachteile des Standes der Technik zu überwinden und eine Vorrichtung zur Verfügung zu stellen, welche bei guter Funktionalität im verbauten Zustand auch einfach herzustellen ist.

Diese Aufgabe wird durch eine Vorrichtung gemäß dem Anspruch 1 gelöst.

Die erfindungsgemäße Vorrichtung ist ein Steckverbinder für ein Kraftfahrzeug, mit einem Verbinderkörper, welcher Verbinderkörper zumindest einen hülsenförmigen, im Querschnitt eine zentrale Längsachse des Steckverbinders umgebenden, äußeren Mantelabschnitt aufweist. Im äußeren Mantelabschnitt sind zumindest zwei Durchtrittsöffnungen ausgebildet, welche zur Aufnahme eines Endabschnittes eines Arretierungselementes vorgesehen sind. Das Arretierungselement ist zum Sichern des Steckverbinders relativ zu einem Gegensteckverbinder vorgesehen, wobei in zumindest einer der Durchtrittsöffnungen ein Haltelement zum Sichern des Arretierungselementes angeordnet ist. Das Haltelement ist als Blechumformteil ausgebildet und für beide Durchtrittsöffnungen ist ein eigenes Haltelement vorgesehen.

Von Vorteil an der erfindungsgemäßen Vorrichtung ist, dass das Halteelement in einem Produktionsprozess zur Serienfertigung einfach hergestellt werden kann. Insbesondere ein Halteelement, welches als Blechumformteil ausgebildet ist, kann bei hoher Festigkeit und hoher Steifigkeit eine möglichst geringe Masse aufweisen. Dadurch dass für beide Durchtrittsöffnungen ein eigenes Halteelement vorgesehen ist, kann dieses darüber hinaus einfach in den Verbinderkörper des Steckverbinders eingesetzt werden.

Weiters kann es zweckmäßig sein, dass der Verbinderkörper einen Ringraum aufweist, der zwischen einem hülsenförmigen, im Querschnitt die zentrale Längsachse umgebenden, inneren Mantelabschnitt und dem äußeren Mantelabschnitt des Steckverbinders liegt, wobei der innere Mantelabschnitt vom äußeren Mantelabschnitt umgeben ist und der innere Mantelabschnitt des Verbinderkörpers mit dem äußeren Mantelabschnitt an einem ersten Endabschnitt durch einen ersten Stirnwandabschnitt verbunden ist und die Mantelabschnitte an einem zweiten Endabschnitt offen zueinander sind, wobei die zumindest zwei Durchtrittsöffnungen sowohl den inneren Mantelabschnitt als auch den äußeren Mantelabschnitt durchdringen. Insbesondere ein derartig ausgebildeter Verbinderkörper weist eine gute Funktionalität zum Einsatz im erfindungsgemäßen Steckverbinder auf.

Ferner kann vorgesehen sein, dass das Haltelement einen Befestigungsabschnitt aufweist, mittels welchem das Haltelement in einer im äußeren Mantelabschnitt angeordneten Halteelementaufnahme formschlüssig aufgenommen ist. Von Vorteil ist hierbei, dass das Halteelement einfach in die Halteelementaufnahme eingesetzt werden kann, wobei das Halteelement nicht durch eine stoffschlüssige Verbindung, wie etwa einer Schweißverbindung mit dem Verbinderkörper verbunden werden muss. Somit kann der Zusammenbau des Steckverbinders vereinfacht und dadurch auch beschleunigt werden.

Darüber hinaus kann vorgesehen sein, dass das Halteelement einen Halteabschnitt aufweist, welcher die Durchtrittsöffnung überspannt. Von Vorteil ist hierbei, dass durch den Halteabschnitt das Arretierungselement im Verbinderkörper gehalten werden kann.

Vorteilhaft ist auch eine Ausprägung, gemäß welcher vorgesehen sein kann, dass das Haltelement einen Stützabschnitt aufweist, welcher an der zum Halteabschnitt gegenüberliegenden Seite des Befestigungsabschnittes angeordnet ist. Der Stützanschnitt kann als Gegenstütze zum Halteabschnitt wirken und das Halteelement gegen Verdrehung gesichert im Verbinderkörper aufnehmen zu können. Insbesondere kann dabei vorgesehen sein, dass das Halteelement im Bereich des Befestigungsabschnittes durch die formschlüssige Verbindung mit dem Verbinderkörper in Richtung Zentrum des Verbinderkörpers gezogen wird und dass sich das Halteelement im Bereich des Halteabschnittes und im Bereich des Stützabschnittes, welche rechts bzw. links der Befestigungsabschnitte angeordnet sind, am Verbinderkörper abstützen kann, wodurch das Halteelement positionsstarr und verdrehstarr am Verbinderkörper aufgenommen ist.

Gemäß einer Weiterbildung ist es möglich, dass der Halteabschnitt in einem Auflagebereich eine Auflagelasche aufweist mittels welcher der Halteabschnitt in einem Abstand zur Durchtrittsöffnung angeordnet ist und diese überspannt. Durch die Auflagelasche kann erreicht werden, dass der Halteabschnitt in einem gewissen Abstand von der Durchtrittsöffnung angeordnet ist und somit das Arretierungselement von der Raststellung in die Freigabestellung bewegt werden kann.

Ferner kann es zweckmäßig sein, dass das Haltelement im Bereich des Befestigungsabschnittes zumindest eine Befestigungsnase zum Hintergreifen der Halteelementaufnahme aufweist. Dadurch kann erreicht werden, dass das Halteelement formschlüssig in der Halteelementaufnahme aufgenommen werden kann. Insbesondere kann durch die Befestigungsnase ein fester Sitz des Halteelementes in der Halteelementaufnahme erreicht werden.

Darüber hinaus kann vorgesehen sein, dass das Haltelement im Bereich des Befestigungsabschnittes einen in etwa mittig angeordneten Längsschlitz aufweist. Von Vorteil ist hierbei, dass dadurch das Halteelement zusammengedrückt werden kann sodass sich die Befestigungsnasen aufeinander zu bewegen und der Halteabschnitt in die Halteelementaufnahme eingesetzt werden kann.

Weiters kann vorgesehen sein, dass das Haltelement im Bereich des Halteabschnittes eine Abschrägung aufweist. Von Vorteil ist hierbei, dass durch die Abschrägung erreicht werden kann, dass sich das Halteelement im Befestigungsabschnitt nach außen hin verjüngt, wodurch es gut in den Halteabschnitt des Verbinderkörpers eingesetzt werden kann.

Gemäß einer besonderen Ausprägung ist es möglich, dass das Haltelement im Bereich des Befestigungsabschnittes eine Lasche aufweist, wobei das Blech in einem Winkel zwischen 90° und 240°, insbesondere zwischen 140° und 210°, bevorzugt zwischen 175° und 185° umgeschlagen ist. Insbesondere kann dadurch erreicht werden, dass das Halteelement einteilig als Blechumformteil geformt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung einer Ausführungsvariante einer Steckerbaugruppe in einem Viertelschnitt;
- Fig. 2: ein Querschnitt eines Ausführungsbeispiels des Steckverbinders mit Schnittführung im Bereich eines Arretierungselementes;
- Fig. 3: eine Schnittdarstellung des Steckverbinders mit Schnittführung entlang einer zentralen Längsachse des Steckverbinders;
- Fig. 4: eine Explosionsdarstellung des Steckverbinders;
- Fig. 5: eine perspektivische Ansicht der Steckverbinder, wobei sich das Arretierungselement in einer Raststellung befindet;
- Fig. 6: eine Detailansicht des Arretierungselementes, wobei sich das Arretierungselement in einer Raststellung befindet;
- Fig. 7: eine perspektivische Ansicht des Steckverbinders, wobei sich das Arretierungselement in einer Freigabestellung befindet;
- Fig. 8: eine Detailansicht des Arretierungselementes, wobei sich das Arretierungselement in einer Freigabestellung befindet;
- Fig. 9: eine perspektivische Ansicht des Halteelementes;
- Fig. 10: einen Schnitt durch den Steckverbinder im Bereich des Halteelementes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

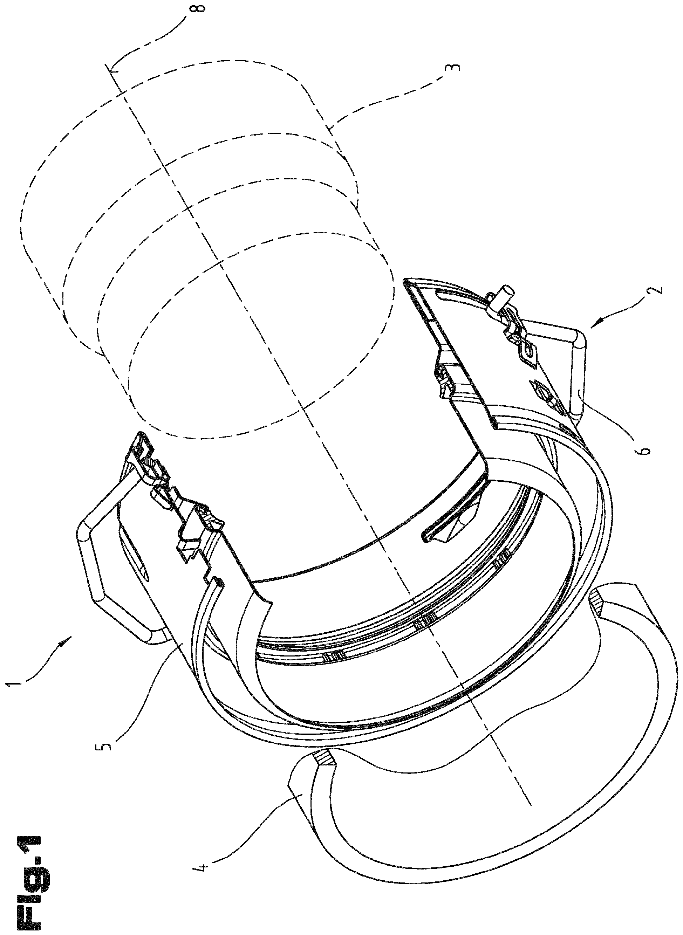

Fig. 1 zeigt eine perspektivische Ansicht einer Steckerbaugruppe 1 mit einem Steckverbinder 2, wobei diese in einem Viertelschnitt geschnitten dargestellt sind. Weiters ist in Fig. 1 schematisch ein Gegensteckverbinder 3 dargestellt, welcher mit der Steckerbaugruppe 1 verbindbar ist. Das Zusammenwirken zwischen Steckerbaugruppe 1 und einem Gegensteckverbinder 3 ist in der AT 509 196 B1 hinlänglich beschrieben.

Weiters ist schematisch ein Rohr 4 dargestellt, an welches der Steckverbinder 2 gekoppelt sein kann. Das Rohr 4 kann beispielsweise ein starres Element, wie etwa ein Kunststoffrohr sein. In einer andern Ausführungsvariante kann das Rohr 4 als flexible Leitung aus einem Gummiwerkstoff ausgebildet sein.

Der Steckverbinder 2 umfasst einen Verbinderkörper 5, welcher vorzugsweise als einteiliges Umformteil, etwa als Tiefziehteil, insbesondere aus einem Edelstahlblech gebildet ist.

Die Steckerbaugruppe 1 wird vorzugsweise in einem Kraftfahrzeug, insbesondere in einem straßengebundenen Kraftfahrzeug mit Verbrennungsmotor, wie etwa einem PKW oder einem LKW eingesetzt.

Natürlich ist es auch denkbar, dass die Steckerbaugruppe 1 in einer sonstigen Anwendung mit Verbrennungsmotor verwendet wird. Dies kann beispielsweise der Einsatz der Steckerbaugruppe 1 in einem stationären Aggregat, in einem Schiffsmotor, in einem Flugzeugmotor, in einer Baumaschine usw. sein.

Im Speziellen kann die Steckerbaugruppe 1 zum Verbinden verschiedener Bauteile der Frischluftzuführung zum Verbrennungsmotor eingesetzt werden. Beispielsweise kann vorgesehen sein, dass der Steckverbinder 2 mit dem entsprechenden Gegensteckverbinder 3 zur Verbindung zweier Teile im Ansaugbereich eines Turboladers vorgesehen ist. Weiters kann beispielsweise auch vorgesehen sein, dass eine derartige Steckerbaugruppe 1 in der vom Turbolader abgehenden Druckseite zur Verbindung zweier Bauteile eingesetzt wird.

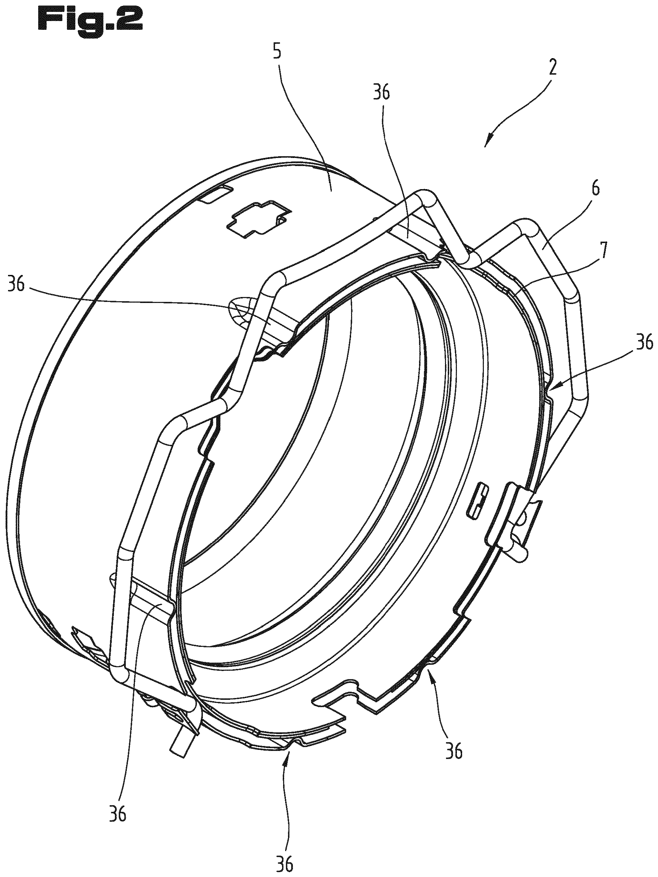

Fig. 2 zeigt einen Querschnitt des Steckverbinder 2 wobei die Schnittführung so gewählt wurde, dass ein im Steckverbinder 2 verbautes Arretierungselement 6 zum Sichern des Steckverbinders 2 und des Gegensteckverbinders 3 zueinenander ersichtlich ist.

Das Arretierungselement 6 ist derart konstruiert, dass es leicht aktiviert und deaktiviert werden kann, sodass der Steckverbinder 2 und der Gegensteckverbinder 3 bedarfsweise voneinander getrennt bzw. miteinander verbunden werden können. Das Arretierungselement 6 kann in eine Raststellung gebracht werden, in welcher der Steckverbinder 2 und der Gegensteckverbinder 3 zueinander gesichert sind. Weiters kann das Arretierungselement 6 in eine Freigabestellung gebracht werden, in welcher der Gegensteckverbinder 3 in den Steckverbinder 2 eingesetzt oder aus diesem herausgenommen werden kann.

Wie aus Fig. 2 weiters ersichtlich, ist in den Verbinderkörper 5 ein Verstärkungselement 7 eingesetzt, welches zur Verbesserung der Steifigkeit des Verbinderkörpers 5 dient. Das Verstärkungselement 7 kann wie in Fig. 2 gut ersichtlich als Hülsensegment ausgebildet sein, und daher ein über den Umfang gesehen offenes Zwischenstück aufweisen. In einer weiteren Ausführungsvariante kann das Verstärkungselement 7 als Hülse ausgebildet sein und daher einen geschlossenen Umfang aufweisen.

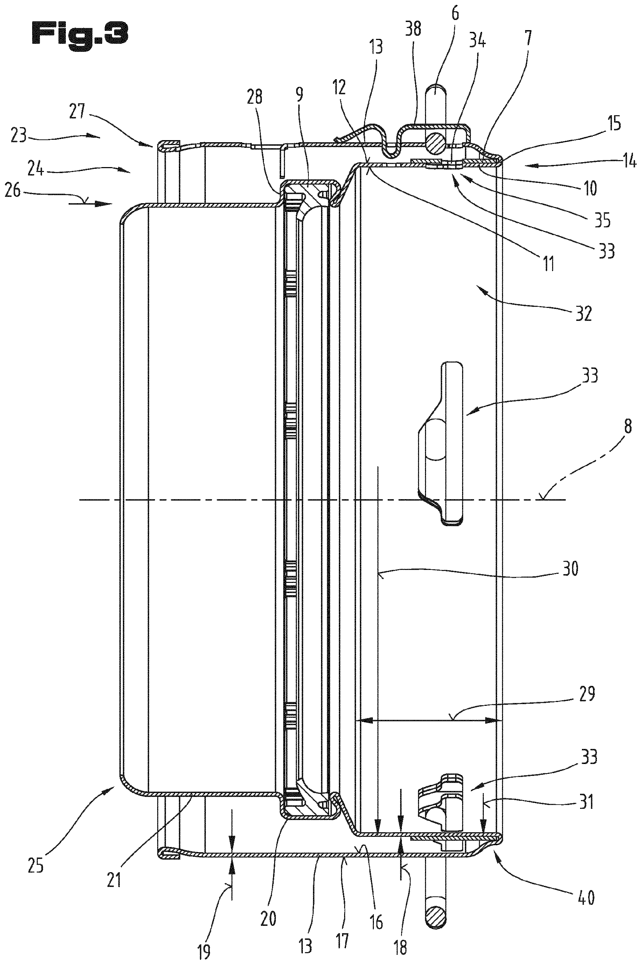

Fig. 3 zeigt einen Schnitt durch die Steckerbaugruppe 1 entlang einer zentralen Längsachse 8 des Steckverbinders 2.

Wie in Fig. 3 gut ersichtlich, kann der Steckverbinder 2 neben dem Verbinderkörper 5 eine Steckerdichtung 9 umfassen, welche im Verbinderkörper 5 aufgenommen ist. Die Steckerdichtung 9 dient dazu, um den Steckverbinder im zusammengesteckten Zustand mit dem Gegensteckverbinder 3 ausreichend abdichten zu können.

Wie in Fig. 3 ersichtlich, ist am Verbinderkörper 5 ein innerer Mantelabschnitt 10 ausgebildet, welcher die zentrale Längsachse 8 des Steckverbinders 2 hülsenförmig umgibt. Mit anderen Worten ausgedrückt, ist der innere Mantelabschnitt 10 ein rotationssymmetrischer Hohlzylinder.

Der innere Mantelabschnitt 10 weist eine innenliegende Mantelfläche 11 und eine außenliegende Mantelfläche 12 auf. Den inneren Mantelabschnitt 10 umgibt ein äußerer Mantelabschnitt 13, welcher ebenfalls bezüglich der zentralen Längsachse 8 rotationssymmetrisch ausgebildet ist. Der innere Mantelabschnitt 10 ist mit dem äußeren Mantelabschnitt 13 an einem ersten Endabschnitt 14 mittels eines ersten Stirnwandabschnittes 15 verbunden. Der erste Stirnwandabschnitt 15 kann verschiedenartig ausgebildet sein. Insbesondere kann vorgesehen sein, dass der erste Stirnwandabschnittes 15 in Form eines Falzes ausgebildet ist, wobei der äußere Mantelabschnitt 13 gegenüber dem inneren Mantelabschnitt 10 um etwa 180° umgeschlagen ist, wodurch der äußere Mantelabschnitt 13 den inneren Mantelabschnitt 10 umgebend angeordnet ist.

Gleich wie der innere Mantelabschnitt 10 weist auch der äußere Mantelabschnitt 13 eine innenliegende Mantelfläche 16 und eine außenliegende Mantelfläche 17 auf.

Der innere Mantelabschnitt 10 wird durch seine innenliegende Mantelfläche 11 und die außenliegende Mantelfläche 12 begrenzt, wodurch sich eine Wandstärke 18 des inneren Mantelabschnittes 10 ergibt. Der äußere Mantelabschnitt 13 wird ebenfalls durch eine innenliegende Mantelfläche 16 und eine außenliegende Mantelfläche 17 begrenzt, wodurch sich eine Wandstärke 19 des äußeren Mantelabschnittes 13 ergibt.

Der innere Mantelabschnitt 10 ist im dargestellten Ausführungsbeispiel abgestuft ausgeführt. Dabei kann vorgesehen sein, dass an den inneren Mantelabschnitt 10 an der gegenüberliegenden Seite des ersten Endabschnittes 14 des Steckverbinders 2, eine Dichtungsaufnahme 20 anschließt, welche ebenfalls im Verbinderkörper 5 ausgeformt ist. In einer derartigen Dichtungsaufnahme 20 kann eine Steckerdichtung 9 aufgenommen sein. Weiters kann vorgesehen sein, dass an die Dichtungsaufnahme 20 ein dritter Mantelabschnitt 21 anschließt, welcher zusammen mit dem äußeren Mantelabschnitt 13 einen Ringraum 22 zur Aufnahme des Rohres 4 bildet.

Der äußere Mantelabschnitt 13 und der dritte Mantelabschnitt 21 sind an einem zweiten Endabschnitt 23 des Steckverbinders 2 offen zueinander, wodurch sich eine Rohraufnahmeseite 24 des Verbinderkörpers 5 ergibt.

Es kann vorgesehen sein, dass der dritte Mantelabschnitt 21 im Bereich des zweiten Endabschnittes 23 eine Abschrägung 25 aufweist, welche an der Rohraufhahmeseite 24 ausgebildet ist. Eine derartige Abschrägung 25 bringt den Vorteil mit sich, dass das Rohr 4 oder ein zur Abdichtung des Rohres 4 verwendetes Dichtungselement leicht in Einschieberichtung 26 in den Ringraum 22 eingeschoben werden kann. Darüber hinaus kann auch vorgesehen sein, dass der äußere Mantelabschnitt 13 eine derartige Abschrägung 27 aufweist, sodass auch das Rohr 4 leicht in den Ringraum 22 eingeschoben werden kann. Anschließend kann das Rohr 4 mit dem Verbinderkörper 5 verpresst werden, sodass die beiden Bauteile eine Einheit bilden.

Die Abschrägungen 25, 27 können beispielsweise durch Umbördelungen mit entsprechenden Radien oder durch Aufweitungen realisiert werden und werden vorzugsweise während des Tiefziehvorganges ausgeformt.

Bevorzugt wird der Verbinderkörper 5 in einem Tiefziehverfahren hergestellt, wobei sämtliche Wandstärken der Mantelabschnitte des Verbinderkörpers 5 in etwa gleich groß sind.

Wie in der Ansicht in Fig. 3 ersichtlich, kann es auch zweckmäßig sein, dass die Dichtungsaufnahme 20 eine Stirnwandung 28 aufweist, welche an den dritten Mantelabschnitt 21 anschließt. Durch die Stirnwandung 28 kann insbesondere eine Aufnahmemulde für die Steckerdichtung 9 ausgebildet sein.

Der innere Mantelabschnitt 10 weist einen Außendurchmesser 30 und eine axiale Erstreckung 29 auf. Ein Innendurchmesser 31 des Verstärkungselementes 7 ist vorzugsweise in etwa gleich groß gewählt, wie der Außendurchmesser 30 des inneren Mantelabschnittes 10.

Im Bereich des inneren Mantelabschnittes 10 weist der Steckverbinder 2 einen Aufnahmeraum 32 auf. Der Aufnahmeraum 32 wird vom inneren Mantelabschnitt 10 umgeben und dient zur Aufnahme eines Teils des Gegensteckverbinders 3.

Der Verbinderkörper 5 weist mehrere, in Umfangsrichtung voneinander beabstandete Durchtrittsöffnungen 33 auf, welche ebenfalls im Bereich des inneren Mantelabschnittes 10 angeordnet sind. In der Raststellung des Arretierungselementes 6, welche diese im eingesteckten und verrasteten Zustand einnimmt, ragt das Arretierungselement 6 durch die jeweilige Durchtrittsöffnung 33 in den Aufnahmeraum 32. In diesen Abschnitten wirkt das Arretierungselement 6 mit einer Verriegelungsfläche einer Rastschulter des Gegensteckverbinders 3 zusammen.

Aus Fig. 3 ist weiters ersichtlich, dass das Verstärkungselement 7 eine Ausnehmung 34 aufweist, welche mit einer der Durchtrittsöffnungen 33 korrespondiert und somit das Arretierungselement 6 durch das Verstärkungselement 7 durchgeführt werden kann. Insbesondere ist es denkbar, dass eine erste Art von Durchtrittsöffnungen 33' und eine zweite Art von Durchtrittsöffnungen 33" ausgebildet sind. Damit korrespondierend kann eine erste Art von Ausnehmungen 34' und eine zweite Art von Ausnehmungen 34" ausgebildet sein.

Insbesondere kann vorgesehen sein, dass die Ausnehmung 34" des Verstärkungselementes 7 und die Durchtrittsöffnung 33" des Verbinderkörpers 5 zumindest teilweise dieselbe Außenkontur aufweisen bzw. deckungsgleich zueinander angeordnet sind.

Insbesondere können die Durchtrittsöffnung 33' und die Ausnehmung 34' zur Gänze deckungsgleich ausgebildet sein, wodurch sich eine gemeinsame Durchtrittsöffnung 35 ergibt.

Wie aus einer Zusammenschau der Fig. 2 und 3 ersichtlich, kann weiters vorgesehen sein, dass im äußeren Mantelabschnitt 13 des Verbinderkörpers 5 eine oder mehrere Sicken 36 eingebracht sind, mittels welchen das Verstärkungselement 7 im Zwischenraum zwischen dem inneren Mantelabschnitt 10 und dem äußeren Mantelabschnitt 13 geklemmt werden kann. Durch die Sicken 36 kann das Verstärkungselement 7 in radialer Richtung fixiert werden bzw. durch eine radiale Klemmung gegebenenfalls auch in axialer Richtung in Position gehalten werden. Die Sicken 36 können zusätzlich zur Erhöhung der Stabilität des äußeren Mantelabschnittes 13 beitragen.

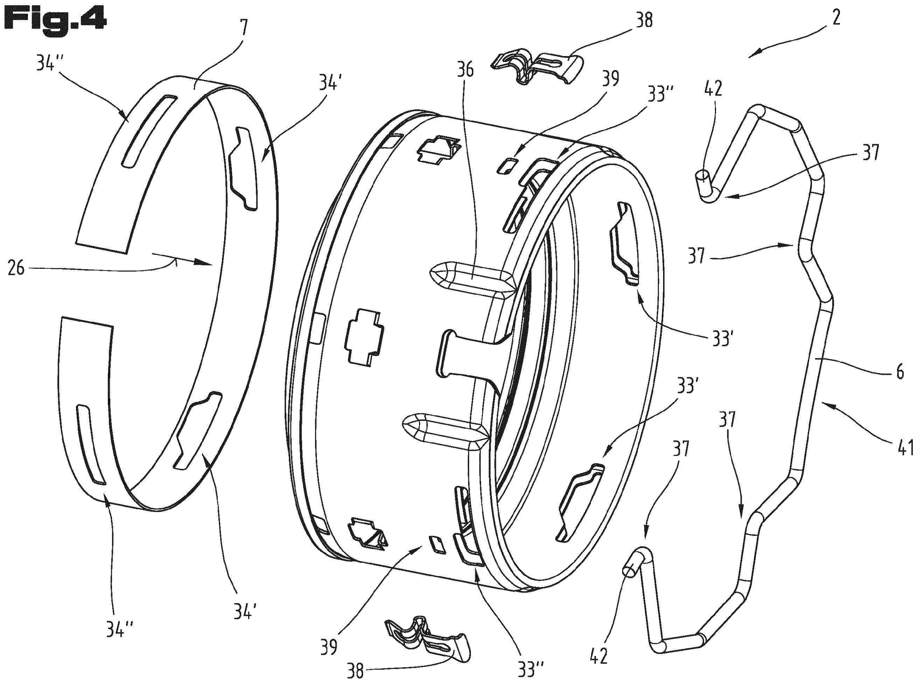

Fig. 4 zeigt eine Explosionsdarstellung der einzelnen Bauteile des Steckverbinders 2, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

In Fig. 4 ist gut ersichtlich, dass das Arretierungselement 6 beispielsweise vier Rastbereiche 37 aufweisen kann, welche zum Durchragen durch die Durchtrittsöffnungen 33 des Verbinderkörpers 5 ausgebildet sind. Die Rastbereiche 37 sind daher als nach innen stehende V-förmige Elemente ausgebildet. Wie aus Fig. 4 weiters ersichtlich, umfasst der Steckverbinder 2 darüber hinaus Halteelemente 38, welche in eine Halteelementaufnahme 39 eingesetzt sind und zur Sicherung des Arretierungselementes 6 dienen.

Das Verstärkungselement 7 ist in der Fig. 4 bereits vorgefertigt dargestellt, wobei es vorgebogen ist und die Ausnehmungen 34 bereits in das Verstärkungselement 7 eingebracht sind. Insbesondere ist ersichtlich, dass das Verstärkungselement 7 als Hülsensegment ausgebildet sein kann. Weiters ist ersichtlich, dass vorgesehen sein kann, dass beispielsweise die zwei Ausnehmungen 34" schlitzförmig ausgebildet sind. Die zwei Ausnehmungen 34' können die exakt gleiche Außenkontur wie die damit korrespondierenden Durchtrittsöffnungen 33' aufweisen.

In einer weiteren nicht dargestellten Ausführungsvariante kann auch vorgesehen sein, dass die Ausnehmungen 34 nicht oder nur teilweise in das vorgefertigte Verstärkungselement 7 eingebracht sind und dass diese erst ausgebildet werden, wenn das Verstärkungselement 7 in den Verbinderkörper 5 eingesetzt ist. Dabei kann das Verstärkungselement 7 im eingesetzten Zustand zusammen mit dem Verbinderkörper 5 gestanzt werden.

Um eine Versteifung des Verbinderkörpers 5 durch das Verstärkungselement 7 zu erreichen, kann vorgesehen sein, dass das Verstärkungselement 7 eine höhere Festigkeit aufweist als der Verbinderkörper 5. Da das Verstärkungselement 7 nicht so stark umgeformt werden muss, wie der Verbinderkörper 5, kann vorgesehen sein, dass der Verbinderkörper 5 aus einem ersten Werkstoff und das Verstärkungselement 7 aus einem zweiten Werkstoff gefertigt ist, wobei der zweite Werkstoff eine geringere Umformfähigkeit aufweist als der erste Werkstoff.

Im Folgenden wird der mögliche Zusammenbau des Steckverbinders 2 beschrieben. In einem ersten Verfahrensschritt wird der Verbinderkörper 5 durch Umformen, insbesondere durch Tiefziehen, aus einem ebenen Blechmaterial gefertigt. Dabei können während des Tiefziehvorganges die im Umfang des Verbinderkörpers 5 angeordneten Ausnehmungen 34 bzw. 39 eingestanzt werden.

In einem weiteren Verfahrensschritt kann das Verstärkungselement 7 ebenfalls durch Umformen in seine Form gebracht werden.

Weiters kann vorgesehen sein, dass zumindest eine der Durchtrittsöffnungen 33 bzw. die damit korrespondierende Ausnehmung 34 erst in einem folgenden Stanzvorgang hergestellt werden, wenn das Verstärkungselement 7 bereits im Verbinderkörper 5 eingelegt ist. Dadurch können die Ausnehmung 34 und die Durchtrittsöffnung 33 in Form einer gemeinsamen Durchtrittsöffnung 35 hergestellt werden, wobei durch den Stanzvorgang sich das Verstärkungselement 7 und der Verbinderkörper 5 formschlüssig ineinander verkeilen und dadurch die axiale Positionierung des Verstärkungselementes 7 verbessert wird.

In einer Alternativvariante kann vorgesehen sein, dass die Ausnehmungen 34 bereits vor dem Einlegen in den Verbinderkörper 5 in das Verstärkungselement 7 eingebracht werden.

In einem weiteren Verfahrensschritt kann das Verstärkungselement 7 in Einschieberichtung 26 in den Verbinderkörper 5 eingeschoben und in diesem eingesetzt werden. Hierbei ist es denkbar, dass das Verstärkungselement 7 in einen Falzbereich 40 eingeschoben wird, welcher im Verbinderkörper 5 im Bereich des Stirnwandabschnittes 15 ausgebildet ist. Durch diesen Falzbereich 40 kann radial ein schmaler Schlitz gebildet sein, in welchen das Verstärkungselement 7 eingeschoben werden kann. Insbesondere kann vorgesehen sein, dass das Verstärkungselement 7 im Falzbereich 40 geklemmt wird.

Zusätzlich können zur axialen und radialen Positionierung und Fixierung des Verstärkungselementes 7 die Sicken 36 dienen. Diese können schon vorab in den Verbinderkörper 5 eingebracht sein. In einer alternativen Herstellvariante können die Sicken 36 auch nach dem Einsetzen des Verstärkungselementes 7 in den Verbinderkörper 5 eingebracht werden, um das Verstärkungselement 7 klemmen zu können.

In einem weiteren Verfahrensschritt kann das Arretierungselement 6 in den Verbinderkörper 5 eingesetzt werden und anschließend die Halteelemente 38 zur Sicherung des Arretierungselementes 6 in den Verbinderkörper 5 eingesetzt werden.

Das Arretierungselement 6 weist einen Haltebereich 41 auf, an welchem es gegriffen werden kann, um in den Verbinderkörper 5 eingesetzt werden zu können und zwischen Raststellung und Freigabestellung bewegt werden zu können.

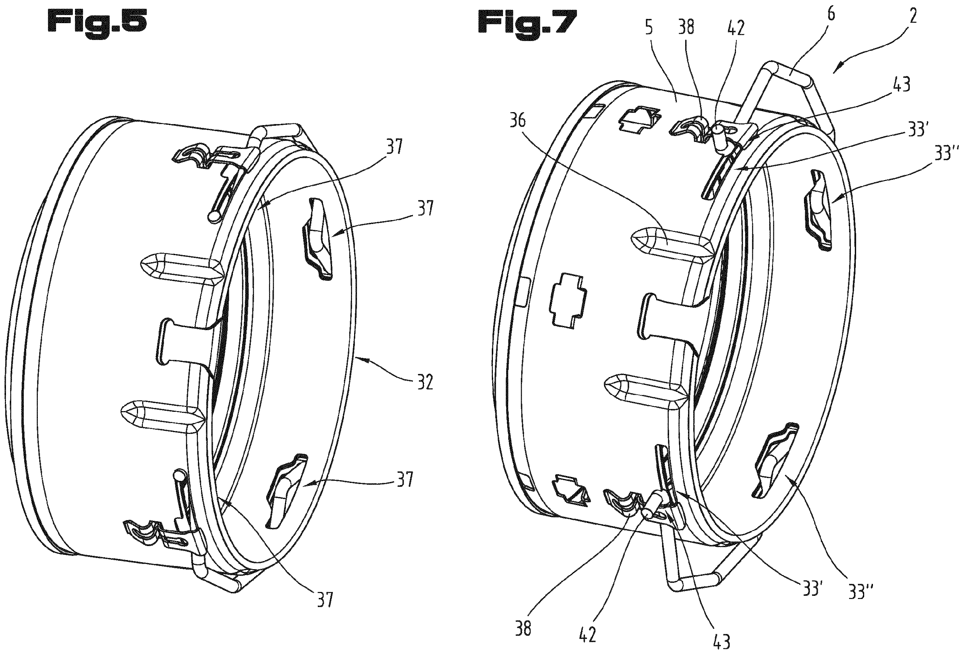

Fig. 5 zeigt eine perspektivische Ansicht des Steckverbinders 2, wobei sich das Arretierungselement 6 in der Raststellung befindet.

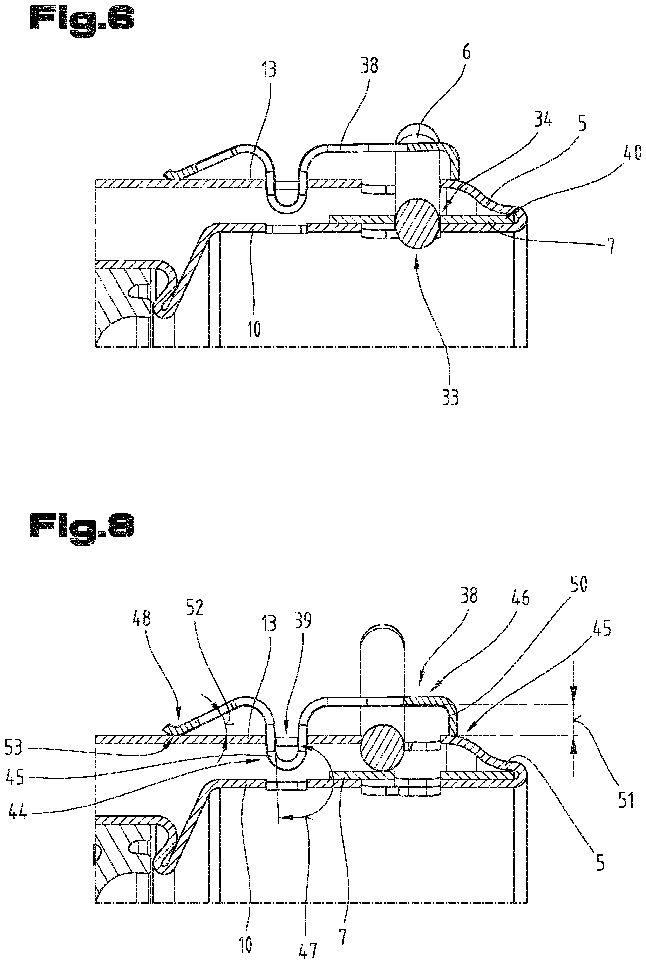

Fig. 6 zeigt eine Detailansicht des Arretierungselementes 6 welches sich in der Raststellung befindet.

Fig. 7 zeigt eine perspektivische Ansicht des Steckverbinders 2, wobei sich das Arretierungselement 6 in der Freigabestellung befindet.

Fig. 8 zeigt eine Detailansicht des Arretierungselementes 6 welches sich in der Freigabestellung befindet.

In den Figuren 5 bis 8 ist weitere und gegebenenfalls für sich eigenständige Ausführungsform des Steckverbinders 2 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Besonders gut ist die Raststellung des Arretierungselementes 6 in einer Zusammenschau der Fig. 5 und 6 und die Freigabestellung des Arretierungselementes 6 in einer Zusammenschau der Fig. 7 und 8 ersichtlich. Wenn sich das Arretierungselement 6 in seiner Raststellung befindet ragen die Rastbereiche 37 in den Aufnahmeraum 32 und der Gegensteckverbinder 3 ist relativ zum Steckverbinder 2 axial gesichert. Wenn sich das Arretierungselement 6 in seiner Freigabestellung befindet ragen die Rastbereiche 37 nicht in den Aufnahmeraum 32 und der Gegensteckverbinder 3 ist relativ zum Steckverbinder 2 axial verschiebbar.

Wie in Fig. 6 ersichtlich, kann vorgesehen sein, dass die Ausnehmung 34 im Verstärkungselement 7 schlitzförmig ausgebildet ist, wobei der Schlitz in etwa eine Breite aufweist, welche dem Durchmesser des Arretierungselementes 6 entspricht. Dadurch kann das Arretierungselement 6 axial fixiert werden.

Wenn man nun am Haltebereich 41 in radialer Richtung weg von der Längsachse des Steckverbinders 2 am Arretierungselement 6 anzieht, so werden aufgrund der Geometrie des Arretierungselementes 6 die Rastbereiche 37 aus dem Aufnahmeraum 32 herausgezogen. Insbesondere wird das Arretierungselement 6 soweit radial nach außen bewegt, bis es in die Freigabestellung entsprechend den Fig. 7 und 8 gebracht ist.

Kurz vor Erreichen der Freigabestellung trifft ein Führungszapfen 42 des Arretierungselementes 6 auf das Halteelement 38 und wird dadurch axial umgelenkt, sodass sich das Arretierungselement 6 in die Freigabestellung bewegt. Insbesondere kann vorgesehen sein, dass im Halteelement 38 eine Abschrägung 43 ausgebildet ist, durch welche bei radialem Zug am Haltebereich 41 eine axiale Bewegung in das Arretierungselement 6 eingeleitet wird. Nach erfolgreicher axialer Verschiebung kann das Arretierungselement 6 losgelassen werden, wobei der Führungszapfen 42 am Verbinderkörper 5 bzw., wie in Fig. 8 besonders gut ersichtlich, am Verstärkungselement 7 aufliegt und somit in der Freigabestellung verbleibt, wobei das Arretierungselement 6 vorgespannt ist.

Um das Arretierungselement 6 aus der Freigabestellung wieder zurück in die Raststellung zu bewegen kann das Arretierungselement 6 geringfügig axial verschoben werden und durch die anliegende Vorspannung des Arretierungselementes 6 bewegt sich dieses selbstständig zurück in die Raststellung, sobald es in die Ausnehmungen 34'des Arretierungselementes 6 eintauchen kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

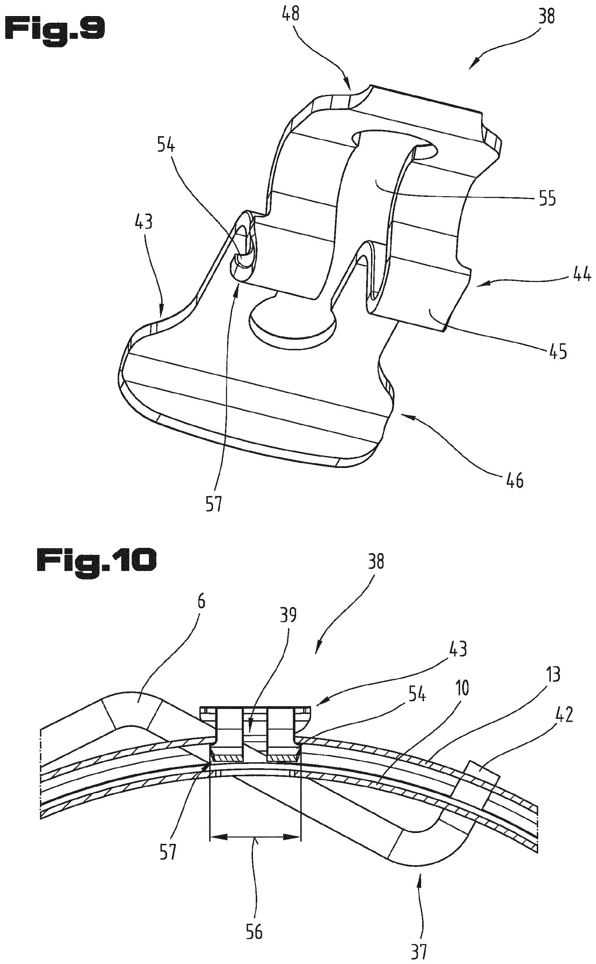

Fig. 9 zeigt das Halteelement 38 in einer perspektivischen Ansicht.

Fig. 10 zeigt einen Schnitt durch den Steckverbinder im Bereich des Halteelementes.

In den Figuren 9 und 10 ist weitere und gegebenenfalls für sich eigenständige Ausführungsform des Steckverbinders 2 gezeigt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Die Funktion des Haltelementes bzw. dessen Aufbau wird anhand einer Zusammenschau der Figuren 7, 8, 9 und 10 beschrieben.

Das Halteelement 38 ist als Blechumformteil ausgebildet und weist daher eine konstante Wandstärke auf. Weiters ist vorgesehen, dass das Halteelement 38 einteilig ausgebildet ist.

Insbesondere kann vorgesehen sein, dass das Halteelement 38 einen Befestigungsabschnitt 44 aufweist, welcher in Form einer Lasche 45 ausgebildet ist. Der Befestigungsabschnitt 44 kann in die Halteelementaufnahme 39 des Verbinderkörpers 5 eingesetzt werden.

Insbesondere kann vorgesehen sein, dass in einer Längserstreckung des Halteelementes 38 gesehen an einem ersten Längsende ein Halteabschnitt 46 ausgebildet ist, welcher die Durchtrittsöffnung 33' überspannt und zur Sicherung des Arretierungselementes 6 dient. Direkt an den Halteabschnitt 46 anschließend kann der Befestigungsabschnitt 44 ausgebildet sein.

Der Befestigungsabschnitt 44 kann durch die Lasche 45 gebildet sein, wobei das Blech in einem Winkel zwischen 90° und 240°, insbesondere zwischen 140° und 210°, bevorzugt zwischen 175° und 185° umgeschlagen ist.

An der zum Halteabschnitt 46 gegenüberliegenden Seite der Lasche 45 ist ein Stützabschnitt 48 ausgebildet. Der Stützabschnitt 48 dient insbesondere dazu, um eine Gegenstütze zum Halteabschnitt 46 bieten zu können. Durch den Stützabschnitt 48 kann das im Halteabschnitt 46 in das Halteelement 38 eingeleitete Drehmoment abgefangen werden.

Weiters kann vorgesehen sein, dass der Halteabschnitt 46 in einem Auflagebereich 49 am Verbinderkörper 5 aufliegt, wobei eine Auflagelasche 50 ausgebildet ist, durch welche der Halteabschnitt 46 in einem Abstand 51 zum Verbinderkörper 5 beabstandet positioniert werden kann. Die Auflagelasche 50 kann beispielsweise im rechten Winkel zum Halteabschnitt 46 angeordnet sein.

Wie besonders gut in Fig. 8 ersichtlich, kann vorgesehen sein, dass der Halteabschnitt 46 im verbauten Zustand des Halteelementes 38 parallel zum äußeren Mantelabschnitt 13 angeordnet ist. Der Stützabschnitt 48 kann in einem Stützwinkel 52 zum äußeren Mantelabschnitt 13 angeordnet sein. In einem Auflagebereich 53 kann der Stützabschnitt 48 am äußeren Mantelabschnitt 13 anliegen.

Wie besonders gut in den Fig. 9 und 10 ersichtlich, kann das Halteelement 38 im Bereich des Befestigungsabschnittes 44 an den beiden Längsseiten jeweils eine Befestigungsnase 54 aufweisen, welche gegenüber dem Befestigungsabschnitt 44 vorstehend ausgebildet ist. Die Befestigungsnase 54 ist vorzugsweise so ausgebildet, um den äußeren Mantelabschnitt 13 des Verbinderkörpers 5 im Bereich der Halteelementaufnahme 39 formschlüssig zu hintergreifen und somit erreichen zu können, dass das Halteelement 38 formschlüssig am Verbinderkörper 5 befestigt ist.

Das Halteelement 38 ist vorzugsweise so ausgebildet, dass es im verbauten Zustand zwischen Befestigungsabschnitt 44 und Halteabschnitt 46 bzw. Stützabschnitt 48 aufgrund seiner Elastizität und seiner federnden Eigenschaften vorgespannt ist. Dadurch kann erreicht werden, dass das Halteelement 38 stabil am Verbinderkörper 5 befestigt werden kann.

Um das Halteelement 38 in den Verbinderkörper 5 einsetzen zu können, kann vorgesehen sein, dass im Halteelement 38 ein sich in Längsrichtung des Halteelementes 38 erstreckender Längsschlitz 55 ausgebildet ist. Der Längsschlitz 55 ist insbesondere im Bereich des Befestigungsabschnittes 44 ausgebildet. Dadurch dass das Halteelement 38 längs geschlitzt ist, kann dieses in dessen Breite 56 gesehen zusammengedrückt werden, um das Halteelement 38 in die Halteelementaufnahme 39 einsetzen zu können. Insbesondere können dadurch die Befestigungsnasen 54 soweit nach innen gedrückt werden, dass sie durch die Öffnung der Halteelementaufnahme 39 hindurchgeführt werden können und diese nach elastischer Rückstellung des Halteelementes 38 formschlüssig hintergreifen können.

Um das Halteelement 38 besser in die Halteelementaufnahme 39 einsetzen zu können, kann vorgesehen sein, dass im Bereich des Befestigungsabschnittes 44 eine Einsetzabschrägung 57 ausgebildet ist. Dur diese Einsetzabschrägung 57 kann das Halteelement 38 beim Hineindrücken in die Halteelementaufnahme 39 in dessen Breite 56 zusammengedrückt werden.

Dadurch kann der Einsetzvorgang des Halteelementes 38 in die Halteelementaufnahme 39 erleichtert werden.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Steckerbaugruppe | 29 | Axiale Erstreckung erster Mantel-abschnitt |
| 2 | Steckverbinder | | |
| 3 | Gegensteckverbinder | 30 | Außendurchmesser erster Mantel-abschnitt |
| 4 | Rohr | | |
| 5 | Verbinderkörper | 31 | Innendurchmesser |
| 6 | Arretierungselement | 32 | Aufnahmeraum |
| 7 | Verstärkungselement | 33 | Durchtrittsöffnung |
| 8 | Längsachse des Steckverbinders | 34 | Ausnehmung |
| 9 | Steckerdichtung | 35 | gemeinsame Durchtrittsöffnung |
| 10 | innerer Mantelabschnitt | 36 | Sicke |
| 11 | innenliegende Mantelfläche | 37 | Rastbereich |
| 12 | außenliegende Mantelfläche | 38 | Halteelement |
| 13 | äußerer Mantelabschnitt | 39 | Halteelementaufnahme |
| 14 | erster Endabschnitt Steckverbinder | 40 | Falzbereich |
| 15 | Stirnwandabschnitt | 41 | Haltebereich |
| 16 | innenliegende Mantelfläche | 42 | Führungszapfen |
| 17 | außenliegende Mantelfläche | 43 | Abschrägung |
| 18 | Wandstärke erster Mantelabschnitt | 44 | Befestigungsabschnitt |
| 19 | Wandstärke zweiter Mantelabschnitt | 45 | Lasche |
| | | 46 | Halteabschnitt |
| 20 | Dichtungsaufnahme Steckverbinder | 47 | Winkel |
| | | 48 | Stützabschnitt |
| 21 | Dritter Mantelabschnitt | 49 | Auflagebereich Halteabschnitt |
| 22 | Ringraum | 50 | Auflagelasche |
| 23 | zweiter Endabschnitt Steckverbinder | 51 | Abstand |
| | | 52 | Stützwinkel |
| 24 | Rohraufhahmeseite | 53 | Auflagebereich Stützabschnitt |
| 25 | Abschrägung | 54 | Befestigungsnase |
| 26 | Einschieberichtung | 55 | Längsschlitz |
| 27 | Abschrägung | 56 | Breite |
| 28 | Stirnwandung Dichtungsaufnahme | 57 | Einsetzabschrägung |

## Patentansprüche

1. Steckverbinder (2) zum Verbinden von Leitungen für flüssige oder gasförmige Medien, mit einem Verbinderkörper (5), welcher Verbinderkörper (5) zumindest einen hülsenförmigen, im Querschnitt eine zentrale Längsachse (8) des Steckverbinders (2) umgebenden, äußeren Mantelabschnitt (13) aufweist, wobei im äußeren Mantelabschnitt (13) zwei Durchtrittsöffnungen (33') ausgebildet sind, welche zur Aufnahme eines Endabschnittes eines Arretierungselementes (6) vorgesehen sind, welches Arretierungselement (6) zum Sichern des Steckverbinders (2) relativ zu einem Gegensteckverbinder (3) vorgesehen ist, wobei im Bereich der zwei Durchtrittsöffnungen (33') ein Haltelement (38) zum Sichern des Arretierungselementes (6) angeordnet ist, **dadurch gekennzeichnet, dass** für beide Durchtrittsöffnungen (33') ein eigenes Haltelement (38) vorgesehen ist, wobei die Haltelemente (38) jeweils als einteilige Blechumformteile ausgebildet sind.

2. Steckverbinder nach Anspruch 1, **dadurch gekennzeichnet, dass** der Verbinderkörper (5) einen Ringraum (22) aufweist, der zwischen einem hülsenförmigen, im Querschnitt die zentrale Längsachse (8) umgebenden, inneren Mantelabschnitt (10) und dem äußeren Mantelabschnitt (13) des Steckverbinders (2) liegt, wobei der innere Mantelabschnitt (10) vom äußeren Mantelabschnitt (13) umgeben ist und der innere Mantelabschnitt (10) des Verbinderkörpers (5) mit dem äußeren Mantelabschnitt (13) an einem ersten Endabschnitt (14) durch einen ersten Stirnwandabschnitt (15) verbunden ist und die Mantelabschnitte (10, 13) an einem zweiten Endabschnitt (23) offen zueinander sind, wobei die zumindest zwei Durchtrittsöffnungen (33) sowohl den inneren Mantelabschnitt (10) als auch den äußeren Mantelabschnitt (13) durchdringen.

3. Steckverbinder nach Anspruch 1 oder 2, **dadurch gekennzeichnet, dass** das Haltelement (38) einen Befestigungsabschnitt (44) aufweist, mittels welchem das Haltelement (38) in einer im äußeren Mantelabschnitt (13) angeordneten Halteelementaufnahme (39) formschlüssig aufgenommen ist.

4. Steckverbinder nach einem der vorhergehenden Ansprüche, **dadurch gekennzeichnet, dass** das Haltelement (38) einen Halteabschnitt (46) aufweist, welcher die Durchtrittsöffnung (33') überspannt.

5. Steckverbinder nach Anspruch 4, **dadurch gekennzeichnet, dass** das Haltelement (38) einen Stützabschnitt (48) aufweist, welcher an der zum Halteabschnitt (46) gegenüberliegenden Seite des Befestigungsabschnittes (44) angeordnet ist.

6. Steckverbinder nach Anspruch 4 oder 5, **dadurch gekennzeichnet, dass** der Halteabschnitt (46) in einem Auflagebereich (49) eine Auflagelasche (50) aufweist mittels welcher der Halteabschnitt (46) in einem Abstand (51) zur Durchtrittsöffnung (33') angeordnet ist und diese überspannt.

7. Steckverbinder nach einem der Ansprüche 3 bis 6, **dadurch gekennzeichnet, dass** das Haltelement (38) im Bereich des Befestigungsabschnittes (44) zumindest eine Befestigungsnase (54) zum Hintergreifen der Halteelementaufnahme (39) aufweist.

8. Steckverbinder nach einem der Ansprüche 3 bis 7, **dadurch gekennzeichnet, dass** das Haltelement (38) im Bereich des Befestigungsabschnittes (44) einen in etwa mittig angeordneten Längsschlitz (55) aufweist.

9. Steckverbinder nach einem der Ansprüche 4 bis 8, **dadurch gekennzeichnet, dass** das Haltelement (38) im Bereich des Halteabschnittes (46) eine Abschrägung (43) aufweist.

10. Steckverbinder nach einem der Ansprüche 3 bis 9, **dadurch gekennzeichnet, dass** das Haltelement (38) im Bereich des Befestigungsabschnittes (44) eine Lasche (45) aufweist, wobei das Blech in einem Winkel (47) zwischen 90° und 240°, insbesondere zwischen 140° und 210°, bevorzugt zwischen 175° und 185° umgeschlagen ist.

## Claims

1. A connector (2) for connecting conduits for liquid or gaseous media, comprising a connector body (5), which connector body (5) comprises at least one sleeve-like outer casing section (13) surrounding in cross-section a central longitudinal axis (8) of the connector (2), wherein in the outer casing section (13) two passages (33') are formed which are provided for receiving an end section of a locking element (6), which locking element (6) is provided for securing the connector (2) relative to a counter connector (3), wherein in the area of the two passages (33') a holding element (38) is arranged for securing the locking element (6), **characterized in that** for both passages (33') a separate holding element (38) is provided, wherein the holding elements (38) are each designed as one-piece sheet-formed parts.

2. The connector as claimed in claim 1, **characterized in that** the connector body (5) comprises an annular space (22) which lies between a sleeve-like inner casing section (10) in cross-section surrounding a central longitudinal axis (8) and the outer casing section (13) of the connector (2), wherein the inner casing section (10) is surrounded by the outer casing section (13) and the inner casing section (10) of the connector body (5) is connected to the outer casing section (13) at a first end section (14) by a first end wall section (15) and the casing sections (10, 13) are open to one another at a second end section (23), wherein the at least two passages (33) pass through both the inner casing section (10) and the outer casing section (13).

3. The connector as claimed in claim 1 or 2, **characterized in that** the holding element (38) comprises a fastening section (44), by means of which the holding element (38) is mounted in a form-fitting manner in a holding element mount (39) arranged in the outer casing section (13).

4. The connector as claimed in any of the preceding claims, **characterized in that** the holding element (38) comprises a holding section (46) which spans the passage (33').

5. The connector as claimed in claim 4, **characterized in that** the holding element (38) comprises a support section (48), which is arranged on the side of the fastening section (44) opposite the holding section (46).

6. The connector as claimed in claim 4 or 5, **characterized in that** the holding section (46) comprises a support tab (50) in a support area (49) by means of which support tab the holding section (46) is arranged at a distance (51) from the passage (33') and spans the latter.

7. The connector as claimed in any of claims 3 to 6, **characterized in that** the holding element (38) has at least one fastening nose (54) for gripping behind the holding element mount (39) in the area of the fastening section (44).

8. The connector as claimed in any of claims 3 to 7, **characterized in that** the holding element (38) has an approximately centrally arranged longitudinal slit (55) in the area of the fastening section (44).

9. The connector as claimed in any of claims 4 to 8, **characterized in that** the holding element (38) has a beveling (43) in the area of the holding section (46).

10. The connector as claimed in any of claims 3 to 9, **characterized in that** the hold-ing element (38) has a tab (45) in the area of the fastening section (44), wherein the sheet met-al is folded at an angle (47) of between 90° and 240°, in particular between 140° and 210°, preferably between 175° and 185°.

## Revendications

1. Connecteur enfichable (2) pour la connexion de conduites pour des milieux liquides ou gazeux, avec un corps de connecteur (5), ce corps de connecteur (5) comprenant au moins une portion d'enveloppe externe (13) en forme de manchon, entourant, en section transversale, un axe longitudinal central (8) du connecteur enfichable (2), dans lequel, dans la portion d'enveloppe externe (13), sont réalisées deux ouvertures de passage (33') qui sont prévues pour le logement d'une portion d'extrémité d'un élément d'arrêt (6), cet élément d'arrêt (6) étant prévu pour la fixation du connecteur enfichable (2) par rapport à un contre-connecteur enfichable (3), dans lequel, au niveau des deux ouvertures de passage (33'), est disposé un élément de maintien (38) pour la fixation de l'élément d'arrêt (6), **caractérisé en ce que**, chacune des deux ouvertures de passage (33') comprend son propre élément de maintien (38), dans lequel les éléments de maintien (38) sont conçus comme des pièces formées en tôle d'une seule pièce.

2. Connecteur enfichable selon la revendication 1, **caractérisé en ce que** le corps de connecteur (5) comprend un espace annulaire (22) qui se trouve entre une portion d'enveloppe interne (10), en forme de manchon, entourant, en section transversale, l'axe longitudinal central (8) et la portion d'enveloppe externe (13) du connecteur enfichable (2), dans lequel la portion d'enveloppe interne (10) est entourée par la portion d'enveloppe externe (13) et la portion d'enveloppe interne (10) du corps de connecteur (5) est reliée avec la portion d'enveloppe externe (13) au niveau d'une première portion d'extrémité (14) par une première portion de paroi frontale (15) et les portions d'enveloppe (10, 13) sont ouvertes l'une par rapport à l'autre au niveau d'une deuxième portion d'extrémité (23), dans lequel les au moins deux ouvertures de passage (33) traversent aussi bien la portion d'enveloppe interne (10) que la portion d'enveloppe externe (13).

3. Connecteur enfichable selon la revendication 1 ou 2, **caractérisé en ce que** l'élément de maintien (38) comprend une portion de fixation (44), au moyen de laquelle l'élément de maintien (38) est logée par complémentarité de forme dans un logement d'élément de maintien (39) disposé dans la portion d'enveloppe externe (13).

4. Connecteur enfichable selon l'une des revendications précédentes, **caractérisé en ce que** l'élément de maintien (38) comprend une portion de maintien (46) qui enjambe l'ouverture de passage (33').

5. Connecteur enfichable selon la revendication 4, **caractérisé en ce que** l'élément de maintien (38) comprend une portion d'appui (48) qui est disposée sur le côté de la portion de fixation (44) opposé à la portion de maintien (46).

6. Connecteur enfichable selon la revendication 4 ou 5, **caractérisé en ce que** la portion de maintien (46) comprend, dans une zone d'appui (49), une patte d'appui (50) au moyen de laquelle la portion de maintien (46) est disposé à une distance (51) de l'ouverture de passage (33') et enjambe celle-ci.

7. Connecteur enfichable selon l'une des revendications 3 à 6, **caractérisé en ce que** l'élément de maintien (38) comprend, au niveau de la portion de fixation (44), au moins un embout de fixation (54) pour un accrochage derrière le logement d'élément de maintien (39).

8. Connecteur enfichable selon l'une des revendications 3 à 7, **caractérisé en ce que** l'élément de maintien (38) comprend, au niveau de la portion de fixation (44), une fente longitudinale (55) disposée de manière approximativement centrée.

9. Connecteur enfichable selon l'une des revendications 4 à 8, **caractérisé en ce que** l'élément de maintien (38) comprend, au niveau de la portion de maintien (46), un chanfrein (43).

10. Connecteur enfichable selon l'une des revendications 3 à 9, **caractérisé en ce que** l'élément de maintien (38) comprend, au niveau de la portion de fixation (44), une patte (45), dans laquelle la tôle est pliée à un angle (47) entre 90° et 240°, plus particulièrement entre 140° et 210°, de préférence entre 175° et 185°.
